# EUROPÄISCHE PATENTSCHRIFT

(11) **EP 0 509 114 B1**
(45) Veröffentlichungstag und Bekanntmachung des Hinweises auf die Patenterteilung: **01.02.1995**
(21) Anmeldenummer: 91106117.4
(22) Anmeldetag: 17.04.1991
(51) Int. Cl.: H04L 12/18

(54) **Verfahren zum Übertragen von Daten an mehrere Datenstationen**
Procedure for the transmission of data to a plurality of stations
Méthode pour la transmission de données à plusieurs stations

(43) Veröffentlichungstag der Anmeldung: 21.10.1992
(73) Patentinhaber: Siemens Nixdorf Informationssysteme Aktiengesellschaft, 33102 Paderborn (DE)
(72) Erfinder: Becker, Klaus, W-1000 Berlin 28 (DE); Götsch, Rainer, W-1000 Berlin 27 (DE); Wolfbeisz, Thomas, W-1000 Berlin 47 (DE); Mertens, Klaus-Dieter, W-4790 Paderborn-Elsen (DE)
(74) Vertreter: Fuchs, Franz-Josef, Dr.-Ing.

(56) Entgegenhaltungen:
- EP-A- 0 255 767
- US-A- 4 725 834
- US-A- 4 868 866
- 9TH DATA COMMUNICATION SYMPOSIUM, September 1985, WHISTLER MOUNTAIN, US Seiten 172 - 179; D. R. CHERITON ET AL: 'HOST GROUPS: A MULTICAST EXTENSION FOR DATAGRAM INTERNETWORKS'

## Beschreibung

Die Erfindung betrifft ein Verfahren zum Übertragen von Daten von einer Zentrale an mehrere Datenstationen über eine Mehrpunktverbindung nach einem vorgegebenen Übertragungsprotokoll, bei dem jeder Datenstation eine Adresse zugeordnet ist, unter der sie Daten empfängt, sowie Meldungen an die Zentrale abgibt und bei dem mindestens zwei Datenstationen Daten von der Zentrale anfordern.

Ein solches Verfahren kann z.B. bei einem Kassensystem verwendet werden, bei dem ein Leitrechner in einer Zentrale Betriebs- und Anwendungsprogramme, die als Daten in einem Speicher abgespeichert sind, sowie Daten in Form von Preislisten verwaltet. Diese Daten müssen in bestimmten Zeitabständen den als Kassen ausgebildeten Datenstationen auf deren Anforderung hin, beispielsweise nach dem täglichen Einschalten oder beim Kassenwechsel, zugesendet werden. Die Daten werden zwischen der Zentrale und den Datenstationen über eine Mehrpunktverbindung übertragen. Diese gestattet es, daß allen Datenstationen die von der Zentrale ausgesendeten Daten nahezu gleichzeitig zur Verfügung stehen. Die einzelnen Datenstationen greifen unter den angebotenen Daten nur auf diejenigen zu, die mit ihrer jeweiligen Adresse versehen sind. Der Ablauf der gesamten Datenübertragung wird durch einen Algorithmus festgelegt, der als Übertragungsprotokoll bezeichnet wird. Dieses enthält Vereinbarungen über den Code, die Betriebsart, über Zeitkriterien etc., die bei der Übertragung der Daten zu beachten ist. Ferner sind im Übertragungsprotokoll die Quittierungsdaten, das Verhalten bei Fehlern während der Übertragung, das wiederholte Aussenden von Daten, Start und Ende der Datenübertragung etc., festgelegt.

Ein eingangs genanntes Verfahren ist z.B. aus der DE 37 36 550 C2 bekannt. Bei diesem sendet eine Zentrale die Daten gleichzeitig nach Art einer Rundfunkübertragung an sämtliche Datenstationen, die Daten angefordert haben. Während der Datenübertragung speichern die einzelnen Datenstationen die nach dem Übertragungsprotokoll geforderten Quittierungsdaten, mit denen der ordnungsgemäße Empfang der Daten quittiert wird, in einem ihnen zugeordneten Speicher ab. Nach Abschluß der Datenübertragung werden diese gespeicherten Daten nacheinander an die Zentrale gesendet. Bei dem bekannten Verfahren kann also erst nach Abschluß der Übertragung der Nutzdaten, das sind die bei der Zentrale angeforderten Daten, festgestellt werden, ob die Übertragung fehlerhaft war und ggfs. für einzelne Daten oder Datenblöcke wiederholt werden muß. Wenn nun in der Anfangsphase der Datenübertragung auf der Verbindung zwischen der Zentrale und den Datenstationen ein Fehler auftritt, so müssen zunächst sämtliche angeforderten Daten übertragen werden, bevor nach Abschluß der Übertragung der Nutzdaten festgestellt werden kann, ob ein solcher Übertragungsfehler vorliegt. Obgleich möglicherweise nur ein Datenblock falsch übertragen worden ist, so kann dies dennoch bedeuten, daß die gesamte Datenübertragung ab dem Auftreten des Fehlers erneut vorgenommen werden muß. Das bekannte Verfahren reagiert also im Falle von Übertragungsfehlern sehr empfindlich mit einem hohen Zeitbedarf für die Datenübertragung.

Ein weiteres Problem besteht bei dem bekannten Verfahren darin, daß nach Abschluß der Datenübertragung sämtliche Datenstationen ihre zwischengespeicherten Quittierungsdaten an die Zentrale senden müssen. Die hierfür erforderliche Zeit ist grundsätzlich der für die Übertragung der Nutzdaten benötigten Zeit zuzurechnen, denn in der Praxis können die bei den Datenstationen eingetroffenen Daten erst dann genutzt werden, wenn feststeht, daß die Übertragung fehlerfrei war. Die für jede Datenstation erforderliche Übertragung von Quittierungsdaten an die Zentrale verlängert daher nachteilig die Gesamtzeit für die Datenübertragung.

Es ist Aufgabe der Erfindung, ein Verfahren anzugeben, mit dem es möglich ist, die Übertragung von Daten von einer Zentrale zu mehreren Datenstationen mit verringertem Zeitaufwand durchzuführen.

Diese Aufgabe wird für ein Verfahren eingangs genannter Art dadurch gelöst, daß die Zentrale eine der Daten anfordernden Datenstationen auswählt und die Adresse der ausgewählten Datenstation der bzw. den weiteren Datenstation(en) übermittelt, daß diese daraufhin ihre Adresse auf die Adresse der ausgewählten Datenstation ändert, daß die Zentrale Daten an die ausgewählte Datenstation überträgt, die auch von der weiteren Datenstation empfangen werden, wobei das Übertragungsprotokoll nur zwischen der Zentrale und der ausgewählten Datenstation während der Datenübertragung abgearbeitet wird und daß nach Abschluß der Datenübertragung die weitere Datenstation ihre Adresse zurücksetzt.

Die Erfindung beruht auf der Erkenntnis, daß Übertragungsfehler mit hoher Wahrscheinlichkeit auf Fehler zurückzuführen sind, die während der Übertragung auf dem Übertragungsabschnitt zwischen der Zentrale einerseits und den Datenstationen andererseits entstehen. Solche Fehler können z.B. durch induktive oder kapazitive Einkopplung von Strom- oder Spannungsimpulsen auf der oft langen Übertragungsleitung zwischen der Zentrale und den Datenstationen entstehen. Diese Fehler gehören zur Klasse der zufälligen Fehler. Andere häufige Fehler gehören zur Klasse der systematischen Fehler, die z.B. softwarebedingt in der Zentrale beim Aufbereiten der Daten zum Senden oder bei der elektronischen Weiterverarbeitung der Daten hardwarebedingt entstehen. Dagegen sind Übertragungsfehler auf der Seite der Datenstationen seltener, da dort im allgemeinen die Übertragungswege kurz sind und beim Empfang der Daten ein verringerter elektronischer Aufwand getrieben werden muß.

Die Erfindung geht nun von der Überlegung aus, daß es zum zuverlässigen Erkennen der häufigsten Übertragungsfehler ausreicht, das Übertragungsprotokoll während der Datenübertragung nur im Zusammenspiel mit einer einzigen Datenstation abzuarbeiten. Gemäß der Erfindung wählt die Zentrale eine der Daten anfordernden Datenstation aus und kommuniziert während der Übertragung der Daten allein mit dieser Datenstation. Alle weiteren Daten anfordernden Datenstationen sind an der Kommunikation nur passiv beteiligt. Durch das Abarbeiten des Übertragungsprotokolls können die oben angeschnittenen häufigsten Übertragungsfehler erkannt und auf diese entsprechend reagiert werden. So ist es möglich, bei fehlerhaftem Empfang einzelner Daten oder Datenblöcke diese von der Zentrale wiederholt auszusenden. Die Datenübertragung muß also nicht wie beim Stand der Technik für alle angeforderten Daten zunächst zu Ende geführt werden, sondern es wird sofort auf einen Übertragungsfehler mit der entsprechenden Gegenmaßnahme reagiert. Dadurch wird es im Fehlerfalle möglich, den Zeitaufwand für die gesamte Datenübertragung, der sowohl die Zeit für die Übertragung der Nutzdaten als auch die für die Übertragung der Meldungen und Daten gemäß dem Übertragungsprotokoll umfaßt, klein zu halten. Eine weitere Zeitersparnis ergibt sich dadurch, daß bei der Abarbeitung des Übertragungsprotokolls die empfangenen Nutzdaten von der ausgewählten Datenstation sofort quittiert werden. Es ist also nicht erforderlich, zwischen der Übertragung einzelner Daten oder Datenblöcke eine Reservezeit vorzusehen, um den sicheren Empfang bei den Datenstationen zu gewährleisten.

Die weitere Datenstation empfängt die an die ausgewählte Datenstation ausgesendeten Daten, indem sie ihre Übertragungseinrichtung auf die Adresse der ausgewählten Datenstation ändert. Durch diese einfache, aber wirkungsvolle Maßnahme wird es möglich, daß die von der Zentrale ausgesendeten Daten simultan von mehreren Datenstationen empfangen werden. Da die weitere Datenstation keine Quittierungsdaten nach dem Übertragungsprotokoll aussendet, diese also entfallen, wird die Gesamtzeit für die Datenübertragung um den entsprechenden Betrag verkürzt. Damit wird beim Verfahren nach der Erfindung durch die Kombination von Datenübertragung unter Einhaltung der Vorschriften nach dem Übertragungsprotokoll mit der gleichzeitigen Übertragung von Daten an weitere Datenstationen durch Adreßänderung eine kurze Datenübertragungszeit unter Beibehaltung einer hohen Zuverlässigkeit der Datenübertragung erreicht.

Die genannten Maßnahmen nach der Erfindung können gemäß dem Schichtenmodell zur Übertragung von Daten in einer höheren Schichtebene realisiert werden. Dadurch bleibt das für die Datenübertragung vorgesehene Übertragungsprotokoll unberührt. Das Verfahren nach der Erfindung kann daher ohne größere Anpassungsprobleme für bestehende Datennetzwerke verwendet werden.

Eine besonders vorteilhafte Ausführungsform nach der Erfindung ist dadurch gekennzeichnet, daß die Zentrale die von den Datenstationen ausgesendeten Anforderungen nach Daten sammelt, daß sie aus diesen Datenstationen Gruppen bildet und für jede Gruppe eine Datenstation auswählt und daß die Übertragung der Daten gruppenweise erfolgt.

Durch diese Maßnahmen wird es möglich, sehr flexibel auf die unterschiedlichen Übertragungswünsche der verschiedenen Datenstationen zu antworten. Damit wird der Tatsache Rechnung getragen, daß bei gleichartigen Datenstationen eine Häufung von gleichen Anforderungswünschen besteht, die die Datenstationen veranlassen, die gleichen Daten von der Zentrale anzufordern.

Vorteilhafterweise werden die Anforderungen nach Daten von den Datenstationen für eine vorgegebene Zeit gesammelt. Erst nach Ablauf dieser Zeit bestimmt die Zentrale die ausgewählte Datenstation. Dadurch wird erreicht, daß die Datenübertragung nach einem vorgegebenen Zeitraster erfolgt und damit zeiteffizienter durchgeführt werden kann, da eine größere Zahl von Datenstationen gleichzeitig bedient werden kann.

Zweckmäßigerweise beträgt die Zeitspanne für das Sammeln der von den Datenstationen abgegebenen Anforderungen nach Daten gleich oder weniger als 10 s. Dadurch wird einerseits der Forderung nach schnellem Datenzugriff durch die Datenstationen Rechnung getragen, andererseits wird erreicht, daß eine genügend große Zahl von Datenstationen an der Datenübertragung beteiligt sind.

Eine weitere Ausgestaltung der Erfindung ist dadurch gekennzeichnet, daß Gruppen von Datenstationen mit gleicher maximaler Datenblocklänge des Empfangsdatenpuffers gebildet werden. Diese Datenblocklänge bestimmt wesentlich die Übertragungsgeschwindigkeit der angeforderten Daten mit. Durch diese Maßnahmen wird gewährleistet, daß die Gesamtzeit für die Datenübertragung minimal wird.

Eine andere Ausgestaltung der Erfindung sieht vor, daß Gruppen von Datenstationen mit gleichen angeforderten Daten gebildet werden. Durch diese Maßnahme wird die zu übertragende Datenmenge an die angeforderte Datenmenge genau angepaßt. Der Datenspeicher der jeweiligen Datenstation wird somit optimal ausgenutzt.

In weiterer Ausbildung der Erfindung kann das Verfahren so realisiert werden, daß bei mehreren Gruppen von Datenstationen, die Daten von der Zentrale anfordern, die Datenübertragung nach dem Zeitmultiplexverfahren erfolgt. Durch die zeitverschachtelte Übertragung von Daten verringert sich zwar die Datenübertragungsrate zwischen der Zentrale und der jeweiligen Gruppe, es wird aber erreicht, daß die Datenübertragung für jede Gruppe in etwa zur gleichen Zeit beendet ist. Für Anwendungen, bei denen gleichzeitig auf mehrere Datenstationen zugegriffen werden muß, ist dies vorteilhaft, weil die Daten in den einzelnen Datenstationen nahezu zum gleichen Zeitpunkt zur Verfügung stehen.

Ein Ausführungsbeispiel der Erfindung wird im folgenden anhand der Zeichnung erläutert. Darin zeigt:
- Fig. 1: die Struktur eines Kassensystems, bei dem mehrere Datenstationen als Kassen ausgebildet sind,
- Fig. 2: den byteweisen Aufbau des Ladebefehls, mit dem die Kassen Daten von der Zentrale anfordern,
- Fig. 3: den byteweisen Aufbau des Mehrfachbetrieb-Befehls, mit dem die Zentrale die Kassen auf Mehrfachbetrieb einstellt,
- Fig. 4: den byteweisen Aufbau des Start-Befehls, mit dem die simultane Datenübertragung durch die Zentrale gestartet wird,
- Fig. 5a bis 5c: ein Ablaufdiagramm, in dem schematisch der Ablauf der Datenübertragung unter Abarbeitung des HDLC-Protokolls dargestellt ist,
- Fig. 6: ein Ablaufdiagramm, in dem schematisch die Abläufe beim Abbruch der Datenübertragung durch die Zentrale oder durch die ausgewählte Kasse dargestellt ist, und
- Fig. 7: ein Ablaufdiagramm, in dem schematisch das Ausklinken einer Kasse nach einem erkannten Fehler bei der Datenübertragung dargestellt ist.

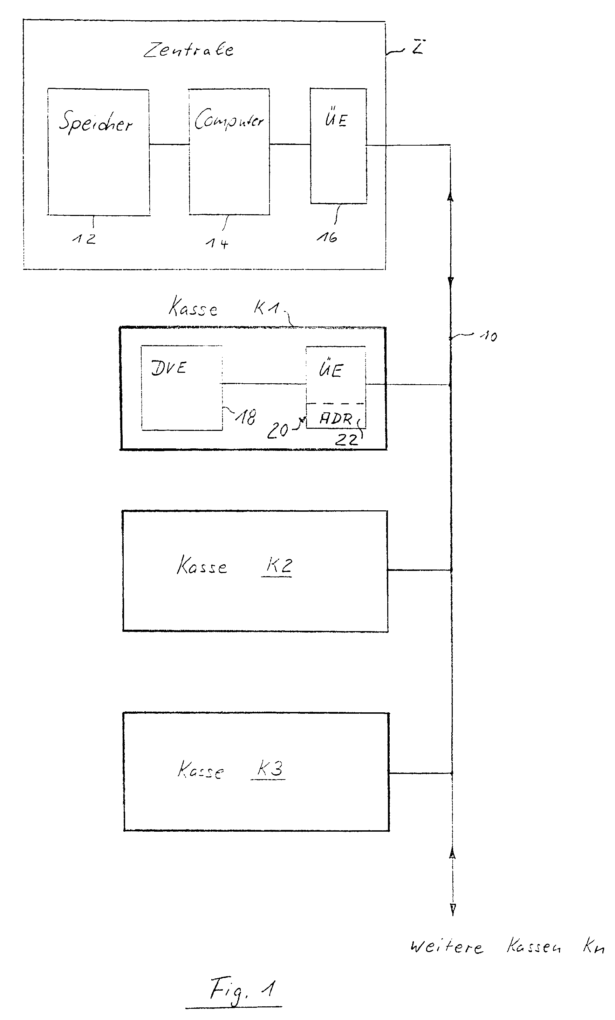

In Fig. 1 ist ein Kassensystem dargestellt, das eine Busstruktur hat und beispielsweise in einem Kaufhaus verwendet werden kann. Ein Datenbus 10, der die Fähigkeit zum Aufbau von Mehrpunktverbindungen besitzt, verbindet eine Zentrale Z und Kassen K1, K2 und K3 untereinander. Der Bus 10 übernimmt den passiven Datentransport. An ihn können weitere Kassen Kn angeschlossen werden. Bei größeren Kaufhauskonfigurationen sind beispielsweise etwa 100 Kassen an den Bus 10 angeschlossen.

Die Zentrale Z enthält eine Übertragungseinrichtung 16, die die Verbindung zwischen dem Datenbus 10 und einem Leitrechner 14 übernimmt. Die Übertragungseinrichtung 16 enthält einen Signalumsetzer, der die Anpassung der zu sendenden Daten an die Eigenschaften des Datenbusses 10 sowie die Umwandlung der empfangenen Signale in eine für den Computer 14 vorgeschriebene Form vornimmt. Ferner enthält die Übertragungseinrichtung 16 eine Anschalteinheit, die den Auf- und Abbau von Datenverbindungen steuert. Der Leitrechner 14 ist mit einem Datenspeicher 12 verbunden, in welchem Betriebsprogramme, Anwendungsprogramme und Daten gespeichert sind. Derartige Daten sind beispielsweise Preislisten, die häufig geändert und zentral verwaltet werden müssen.

Die Kassen K1 bis Kn haben hinsichtlich der Datenübertragung den gleichen Aufbau, der anhand der Kasse K1 näher erläutert werden soll. Die Kasse K1 ist über eine Übertragungseinrichtung 20 an den Datenbus 10 angeschaltet. Die Übertragungseinrichtung 20 hat prinzipiell den selben Aufbau wie die Übertragungseinrichtung 16 der Zentrale Z. Die Übertragungseinrichtung 20 besitzt einen Adreßbereich 22, der eine Adresse enthält, unter der die Übertragungseinrichtung 20 Daten sendet bzw. Daten empfängt. Diese Adresse dient also als Quellenadresse bzw. als Zieladresse für die Daten. Die Übertragungseinrichtung 20 ist mit einer Datenverarbeitungseinheit 18 verbunden, die die Rechnerunterstützung für die Kasse K1 leistet. Die Datenverarbeitungseinheit 18 hat Zugriff auf einen Speicher (nicht dargestellt), der die empfangenen Daten speichert.

Die Datenübertragung wird unter Anwendung des HDLC-Protokolls (High Level Data Link Control Procedure) durchgeführt. Dieses Übertragungsprotokoll läßt sich hier vorteilhaft einsetzen, da es ein einheitliches Format hat, durch seine Bitorientierung unabhängig von einem Code ist, eine hohe Ausnutzung des Übertragungskanals gestattet und schließlich einen modularen Aufbau hat.

Die Übertragungseinrichtung 20 besitzt die Fähigkeit, ihre Adresse im Adreßbereich 22 während des Betriebes abzuändern. Diese Abänderung nimmt die Datenverarbeitungseinheit 18 programmgesteuert vor. Dadurch wird es möglich, daß die Kasse K1 auch Daten empfängt, die nicht für sie bestimmt sind, sondern von der Zentrale Z mit einer anderen Zieladresse versehen worden sind. Der für die Datenübertragung relevante Aufbau der Kassen K2, K3 bis Kn entspricht im wesentlichen dem der Kasse K1, so daß dieser nicht näher erläutert werden muß.

Üblicherweise wird nach dem Einschalten einer Kasse, beispielsweise der Kasse K1, an die Zentrale Z ein Wunsch nach Datenübertragung gesendet, um ein Betriebsprogramm für den Betrieb der Kasse K1 oder die aktuelle Preisliste zu laden. Derartige Anforderungen nach Daten gehen beispielsweise bei Beginn des täglichen Betriebs in einem bestimmten Zeitabschnitt bei der Zentrale Z gehäuft ein. Diese sammelt die Anforderungen für eine vorgegebene Zeit, die etwa 10 s betragen sollte, und bildet Gruppen von Kassen mit gleichen angeforderten Betriebsprogrammen, Anwenderprogrammen oder Preisdaten. Es sei im folgenden angenommen, daß unter einer Anzahl von n Kassen, die Daten von der Zentrale Z anfordern, die Kassen K1, K2 und K3 die gleichen Daten anfordern, so daß die Zentrale Z die Kassen K1, K2 und K3 zu einer Gruppe zusammenfaßt. Gemäß der Erfindung wählt nun die Zentrale Z eine der Kassen K1, K2 und K3 aus, beispielsweise die Kasse K1. Deren Adresse wird von der Zentrale Z den Kassen K2 und K3 übermittelt. Diese veranlassen durch ihre Datenverarbeitungseinheiten, daß die Adresse in der jeweiligen Übertragungseinheit auf die Adresse der Kasse K1 eingestellt wird. Anschließend überträgt die Zentrale Z die Daten, die mit der Zieladresse der Kasse K1 versehen sind, an die Kasse K1. Das HDLC-Übertragungsprotokoll wird in dieser Phase nur zwischen der Zentrale Z und der Kasse K1 abgearbeitet, was später noch näher erläutert wird. Dies bedeutet, daß nur die Kasse K1 Quittierungsdaten oder Kommandos nach Empfang von Datenblöcken an die Zentrale Z zurücksendet. Die weiteren Kassen K2 und K3 der von der Zentrale gebildeten Gruppe empfangen rein passiv unter ihren geänderten Adressen die Daten und geben keine Rückmeldungen an die Zentrale Z ab. Die Gruppe der Kasse K1, K2 und K3 bildet somit ein Master-Slave-System, bei dem die Kasse K1 der Master ist und die Kassen K2, K3 Slaves sind. Die Kasse K1 übernimmt als Master quasi die Aufgabe der Datensteuerung gemäß dem HDLC-Übertragungsprotokoll für die Slaves, d.h. für die Kassen K2, K3, mit. Dies ist deshalb möglich, weil die Kassen K1, K2 und K3 dasselbe Übertragungsverhalten zeigen und die für den Master vereinbarten Übertragungsvorschriften, wie beispielsweise die Festlegung der Zeitintervalle für die Quittierungen, die Folgesteuerung für die Übertragung der Nutzdaten etc., auch für die Slaves gelten.

Nach Abschluß der Datenübertragung von der Zentrale an die Kasse K1 und damit indirekt auch an die Kassen K2, K3 setzen die Kassen K2, K3 ihre Adresse zurück, so daß sie in einer Punkt-zu-Punkt-Verbindung mit der Zentrale Z kommunizieren können.

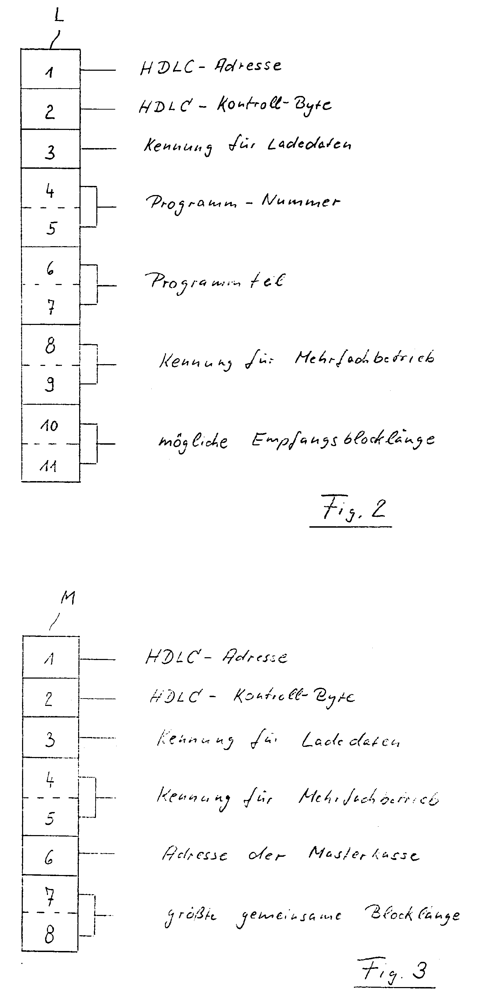

In Fig. 2 ist der byteweise Aufbau eines Ladebefehls L dargestellt, mit dem die Kassen K1 bis Kn Daten von der Zentrale Z anfordern können. Das erste Byte des Ladebefehls L enthält eine HDCL-Adresse, an die der Ladebefehl L gerichtet ist, d.h. die Adresse der Zentrale Z. Das zweite Byte wird als HDLC-Kontroll-Byte bezeichnet. Es enthält gemäß den HDLC-Vorschriften das Format des ausgesendeten Befehls (Information-Frame) sowie Sende- und Empfangsfolgezähler. Das dritte Byte enthält eine Kennung für Ladedaten. Mit dieser Kennung wird die Datenquelle definiert, aus der Daten in die anfordernde Kasse geladen werden sollen. Die Bytes 4 und 5 enthalten die Programm-Nummer, unter der das zu ladende Programm oder die zu ladenden Daten im Speicher 12 der Zentrale Z abgelegt sind. Diese Daten sind im allgemeinen segmentiert. Die Bytes 6 und 7 kennzeichnen den angeforderten Programmteil bzw. das Datensegment.

Die Bytes 8 und 9 enthalten eine Kennung für den Mehrfachbetrieb, d.h. ob die betreffende Kasse für den simultanen Empfang von Daten ausgelegt ist. Mit Hilfe dieser Kennung kann die Zentrale Z entscheiden, ob die betreffende Kasse in eine Gruppe einbezogen werden kann, für die eine simultane Datenübertragung vorgesehen ist. Die Bytes 10 und 11 enthalten Informationen über die Datenblocklänge des Empfangsdatenpuffers der den Ladebefehl L aussendenden Kasse K1 bis Kn. Typische Datenblocklängen sind 128, 256, 512 und 1024 Bytes.

In Fig. 3 ist die byteweise Struktur eines Mehrfachbetrieb-Befehls M dargestellt. Dieser Befehl wird von der Zentrale Z an die Kassen K1, K2 und K3 ausgesendet, die von der Zentrale Z zu einer Gruppe zusammengeschlossen wird, die im Mehrfachbetrieb oder Simultanbetrieb mit Daten versorgt werden. Das erste Byte des Mehrfachbetrieb-Befehls M enthält seine Zieladresse, d.h. eine der Adressen der Kassen K1, K2 oder K3. Das zweite Byte enthält das HDLC-Kontrollbyte, welches das Format des ausgesendeten Befehls gemäß den HDLC-Vorschriften festlegt. Mit dem Wert des dritten Bytes wird bei den angesprochenen Kassen K1, K2 oder K3 die Datensenke festgelegt, zu der die Daten bei der Übertragung gelangen sollen. Die Bytes 4 und 5 enthalten eine Kennung für den Mehrfachbetrieb. Diese Kennung löst bei den den Mehrfachbetrieb-Befehl M empfangenden Kassen K1, K2 und K3 die für das simultane Empfangen von Daten erforderlichen Funktionen aus. Das 6. Byte enthält die Adresse der ausgewählten Kasse oder der Masterkasse, d.h. die Adresse der Kasse K1 gemäß dem Beispiel nach der Fig. 1. Die Bytes 7 und 8 enthalten die größte gemeinsame Blocklänge, welche die Zentrale Z durch Auswertung der in den Bytes 10 und 11 des Ladebefehls L enthaltenen möglichen Datenblocklängen festgestellt hat. Die Verwendung der größten gemeinsamen Blocklänge ermöglicht eine noch schnellere Datenübertragung im Mehrfachbetrieb.

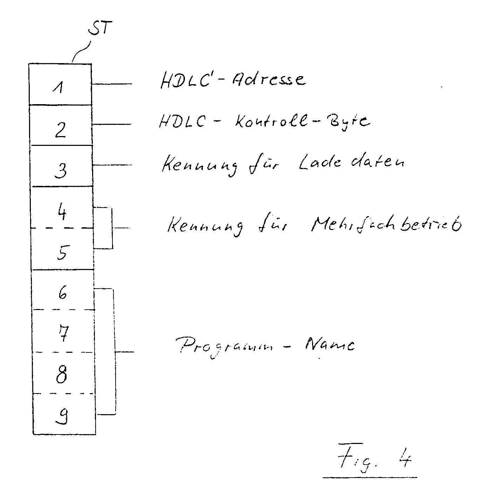

In Fig. 4 ist der byteweise Aufbau eines Start-Befehls ST dargestellt, den die Zentrale der simultanen Datenübertragung an die ausgewählte Kasse K1 sendet. Dieser Befehl ist hinsichtlich der Bytes 1 bis 4 genauso aufgebaut wie der Mehrfachbetriebs-Befehl M. Die Bytes 6 bis 9 enthalten weitere Nutzdaten wie z.B. den Namen des Programms, das an die Kassen K1, K2 und K3 gesendet wird.

Der ST-Befehl dient der Synchronisation der einzelnen Datenkassen; er wird gleichzeitig von ihnen allen empfangen und interpretiert. Durch ihn wird die variable Wartezeit zum Einsammeln der Anforderungen von z.B. 10 s beendet. Außerdem werden von den Slave-Kassen die aktuellen Sende- und Empfangsblockzähler übernommen. Beantwortet wird der ST-Befehl ebenso wie die weiteren Übertragungsblöcke nur von der Kasse K1, die als Masterkasse dient.

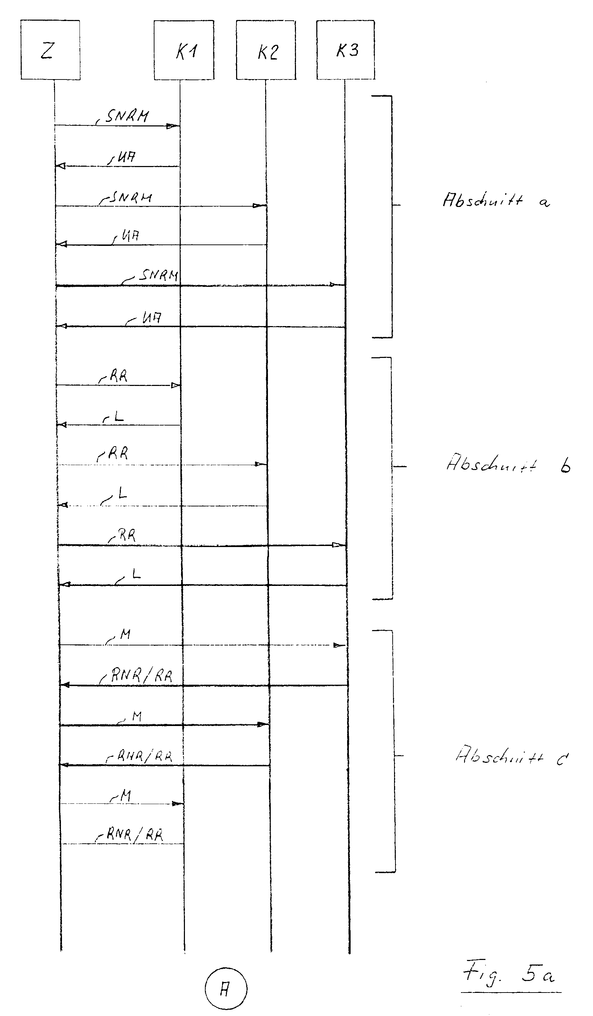

In den Fig. 5a, b, c ist in einem Ablaufdiagramm der Datenverkehr bei der Datenübertragung zwischen der Zentrale Z und den Kassen K1, K2 und K3 schematisch dargestellt. Der Ablauf ist in verschiedene Abschnitte a bis g unterteilt. Die Datenübertragung wird entsprechend dem HDLC-Übertragungsprotokoll im sogenannten NRM-Aufforderungsbetrieb (NRM=Normal Response Mode) durchgeführt. Dies bedeutet, daß die Kassen K1, K2 und K3 nur dann Daten oder Rückmeldungen senden dürfen, wenn sie von der Zentrale Z dazu aufgefordert worden sind. Die Zentrale Z muß also die einzelnen Kassen K1 bis K3 mit entsprechenden Befehlen abfragen, ob diese eine Meldung abgeben wollen.

Im Abschnitt a sammelt die Zentrale Z die von den Kassen K1 bis K3 abgegebenen Anforderungen nach Daten ein. Hierzu sendet die Zentrale zunächst an die Kasse K1 einen SNRM-Befehl (Set Normal Response Mode). Mit diesem Befehl wird die adressierte Kasse K1 aufgefordert, den Aufforderungsbetrieb zu beginnen. Die Kasse K1 bestätigt die Annahme des SNRM-Befehls mit einer UA-Meldung (UA = unnumbered acknowledge). Diese Meldung zeigt an, daß die Kasse K1 eine logische Verbindung zur Zentrale Z aufgebaut hat. Entsprechend wird im Abschnitt a mit den Kassen K2 und K3 verfahren. Nach dem Durchlaufen des Abschnitts a sind zwischen der Zentrale Z und den Kassen K1, K2 und K3 jeweils eine logische Datenverbindung aufgebaut.

Im nächsten Abschnitt b sendet die Zentrale Z an die Kasse K1 einen RR-Befehl (RR = receive ready). Dieser Befehl wird dazu verwendet, der adressierten Gegenstelle die Bereitschaft für den Empfang eines Datenübertragungsblocks zu vermitteln. Die angesprochene Kasse K1 sendet daraufhin einen Ladebefehl L, mit dem sie die Zentrale Z auffordert, bestimmte Daten, beispielsweise ein Betriebsprogramm, ein Anwenderprogramm oder eine aktuelle Preisliste zu senden. Die Zentrale Z verfährt mit den Kassen K2, K3 entsprechend. Nach Abschluß des Abschnitts b ist die Zentrale Z über die Ladewünsche der Kassen K1, K2 und K3 informiert. Sie kann entsprechend der angeforderten Daten, der Kennung für Mehrfachbetrieb der Kassen K1 bis K3 sowie deren mögliche Empfangsblocklänge die Kassen K1 bis K3 zu einer Gruppe zusammenfassen, für die eine Datenübertragung im Mehrfachbetrieb möglich ist. Die Zentrale Z wählt dann z.B. die Kasse K1 als sogenannte Masterkasse aus, mit der sie die Datenübertragung unter Abarbeitung des Übertragungsprotokolls durchführen wird.

Im Abschnitt c sendet die Zentrale Z an die Kasse K3 den Mehrfachbetrieb-Befehl M, mit dem sie die Kasse K3 über die beabsichtigte simultane Datenübertragung informiert, ferner die Adresse der Masterkasse, d.h. der Kasse K1, sowie die Blocklänge, mit der die Datenübertragung durchgeführt werden soll. Die Kasse K3 antwortet mit einer RR-Meldung oder einer RNR-Meldung (RNR = Receive Not Ready). Die RNR-Meldung dient dazu, der Zentrale mitzuteilen, daß die absendende Stelle vorübergehend nicht bereit ist, weitere ankommende Datenblöcke zu empfangen. Erst eine RR-Meldung hebt diesen Zustand auf. Die Kasse K3 vergleicht die ihr im Mehrfachbetrieb-Befehl M mitgeteilte Adresse mit ihrer eigenen Adresse. Stimmt diese nicht überein, so erkennt die Kasse K3, daß sie im Master-Slave-System der Gruppe die Rolle des Slave übernehmen soll und stellt ihre Adresse in der Übertragungseinrichtung auf die Adresse des Masters K1 ein. Entsprechend wird im Abschnitt c bei der Kasse K2 verfahren.

Zuletzt wird der Kasse K1, die Master-Funktionen übernehmen soll, der Mehrfachbetrieb-Befehl M übermittelt. Die Kasse K1 stellt nun fest, daß die ihr mitgeteilte Adresse mit der eigenen Adresse übereinstimmt, was bedeutet, daß sie bei der Datenübertragung die Rolle des Masters übernehmen soll. Nach Abschluß des Verfahrensabschnitts c sind die Master- bzw. Slave-Rollen innerhalb der Gruppe verteilt und die für die Datenübertragung erforderlichen Parameter, wie z.B. die Blocklänge, festgelegt.

Im Abschnitt d nach der Fig. 5b sendet die Zentrale Z an die Kasse K3 einen RR-Befehl. Diese gibt daraufhin eine DM-Meldung (DM = disconnect mode) ab, mit der sie mitteilt, daß sie logisch von der Datenverbindung mit der Zentrale Z getrennt ist und sich in einer Wartebetriebsart befindet. Gleiches erfolgt mit der Kasse K2.

Im Abschnitt e ist dargestellt, daß die Zentrale Z gemäß dem Aufforderungsbetrieb in vorgegebenen Zeitabständen die Kassen K2 und K3 wiederholt mit dem SNRM-Befehl auffordert, Daten oder Meldungen abzugeben. Da diese jedoch ihre logische Verbindung zur Zentrale Z gelöst haben, bleibt eine Antwort aus. Im Abschnitt e sendet die Zentrale Z ferner den Startbefehl ST an die Kasse K1. Diese quittiert den Empfang des Startbefehls ST mit einer RR-Meldung. Mit dem Empfang des Startsignals, welches aufgrund der Adreßänderung auch von den Kassen K2 und K3 empfangen wird (angedeutet durch gestrichelte Pfeile im Abschnitt e), werden die Empfangs- und Sendefolgezähler, die für die Kasse K1 gelten, von den Kassen K2 und K3 übernommen. Diese Blockzähler dienen zur Fehlererkennung bei der weiteren Übertragung der Nutzdaten.

Die Zentrale Z verwaltet einen Sendefolgezähler für die Nutzdatenblöcke, die sie aussendet. Davon unabhängig verwalten die Kassen K1 bis K3 jeweils einen Empfangsfolgezähler für fehlerfrei empfangene Nutzdatenblöcke. Der Sendefolgezähler gibt nun die Sendefolgenummer des nächsten zu sendenden Nutzdatenblocks an. Sein Wert wird bei jedem in normaler Folge übermittelten Datenblock um 1 erhöht. Einem Nutzdatenblock, der in normaler Folge übertragen wird, wird vor der Übertragung der aktuelle Wert des Sendefolgezählers als Sendefolgenummer mitgegeben. Der Empfangsfolgezähler gibt die Empfangsfolgenummer des zu empfangenden Nutzdatenblocks an, der als nächster in normaler Folge erwartet wird. Sein Wert wird bei jedem fehlerfrei empfangenen Datenblock um 1 erhöht. Ein Nutzdatenblock gilt als fehlerfrei empfangen, wenn dessen Sendefolgenummer gleich dem aktuellen Wert des Empfangsfolgezählers ist. Durch das Gleichsetzen der Empfangsfolgezähler der Kassen K1 bis K3 kann die einwandfreie Datenübertragung zu den Kassen K1 bis K3 unabhängig voneinander überwacht werden.

Im Abschnitt f wird die Übertragung der Nutzdatenblöcke schematisch dargestellt. Ein Nutzdatenblock I (1) mit der Sendefolgenummer 1 wird von der Zentrale Z an die Kasse K1 gesendet. Diesen Nutzdatenblock können auch die Kassen K2 und K3 empfangen. Jedoch wird der Empfang der Nutzdaten nur durch die Kasse K1 quittiert. Dabei wird der zeitliche Ablauf der Nutzdatenübertragung durch die RNR- bzw. RR-Meldung gesteuert. Nach Empfang einer RR-Meldung sendet die Zentrale Z den nachfolgenden Nutzdatenblock I (2) mit der Sendefolgenummer 2. Wird dieser ordnungsgemäß empfangen, so antwortet die Kasse K1 mit einer RR-Meldung sowie mit der um 1 erhöhte Empfangsfolgenummer. Diese Empfangsfolgenummer gibt an mit welcher Sendefolgenummer der nächste empfangene Nutzdatenblock erwartet wird. Die Empfangsfolgenummer zeigt der Zentrale Z an, daß sie alle Nutzdatenblöcke mit der Sendefolgenummer N bis einschließlich N-1 fehlerfrei empfangen hat.

Es wird angenommen, daß die Kasse K1 den Nutzdatenblock I (3) nicht fehlerfrei empfangen hat. Daraufhin sendet die Kasse K1 eine RR-Meldung an die Zentrale Z, deren Empfangsfolgenummer nicht um 1 erhöht worden ist. Die Zentrale Z erkennt nun, daß ein Übertragungsfehler vorlag und der Nutzdatenblock I (3) nicht ordnungsgemäß übertragen worden ist. Sie wiederholt deshalb die Übertragung dieses Nutzdatenblocks, dessen ordnungsgemäßer Empfang von der Kasse K1 mit einer RR-Meldung und der um 1 erhöhten Empfangsfolgenummer quittiert wird. Die Empfangsfolgezähler der Kassen K2 und K3 arbeiten in gleicher Weise wie der der Kasse K1, so daß der ordnungsgemäße Empfang der Daten auch bei den Kassen K2 und K3 festgestellt werden kann. Man erkennt hierbei einen wesentlichen Vorteil des erfindungsgemäßen Verfahrens, denn im Fehlerfall wird die Zentrale Z durch das Abarbeiten des Übertragungsprotokolls während der Datenübertragung auf Übertragungsfehler aufmerksam gemacht. Sie kann somit ohne Zeitverzögerung sofort Gegenmaßnahmen einleiten, beispielsweise den fehlerhaft empfangenen Nutzdatenblock wiederholt aussenden.

Die Übertragung der Nutzdaten wird in der vorher geschilderten Weise fortgeführt. Gemäß dem Aufforderungsbetrieb werden in vorgegebenen Zeitabständen die Kassen K2 und K3 wiederholt von der Zentrale Z mit einem SNRM-Befehl aufgefordert, Daten oder Meldungen abzugeben. Die Kassen K2 und K3 antworten auf diesen Befehl jedoch nicht.

In Fig. 5c wird im Abschnitt g der letzte Nutzdatenblock I (n) an die Kasse K1 übertragen. Diese quittiert den Empfang mit einer RR-Meldung, woraufhin die Zentrale Z an die Kasse K1 einen Ende-Befehl mit der Kennung FE aussendet, den auch die Kassen K2 und K3 empfangen und interpretieren. Dadurch erkennen alle Kassen das Ende der Nutzdatenübertragung. Die Kassen K2 und K3 schalten danach auf ihre ursprüngliche Adresse zurück. Quittiert wird jedoch der Ende-Befehl nur von der Kasse K1 mit einer RR-Meldung. Wenn nun die Zentrale die Kasse K1 gemäß dem Aufforderungsbetrieb mit einem RR-Befehl auffordert, eine Meldung abzugeben, so bricht diese die Übertragung zur Zentrale mit dem Aussenden einer DM-Meldung ab und beendet diesen Abschnitt der Übertragung. Nach Abschluß des Abschnitts g sind somit die Kassen K1, K2 und K3 ohne logische Datenverbindung zur Zentrale Z und in einem Wartebetriebszustand. Die Zentrale Z kann nunmehr eine erneute Datenübertragung mit SNRM-Befehlen an die Kassen K1 bis K3 beginnen, wie ab Abschnitt a zuvor beschrieben worden ist.

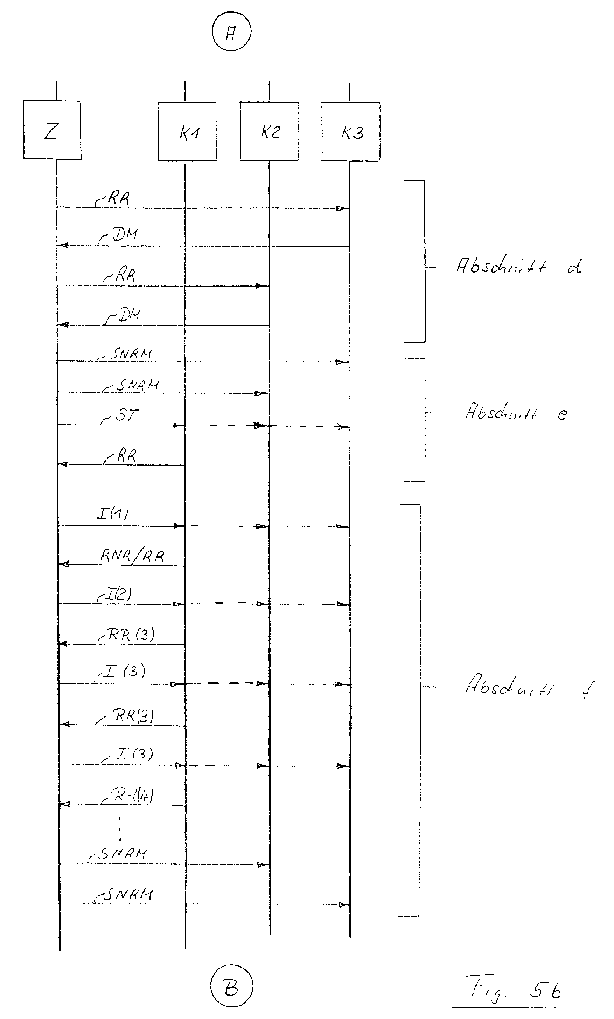

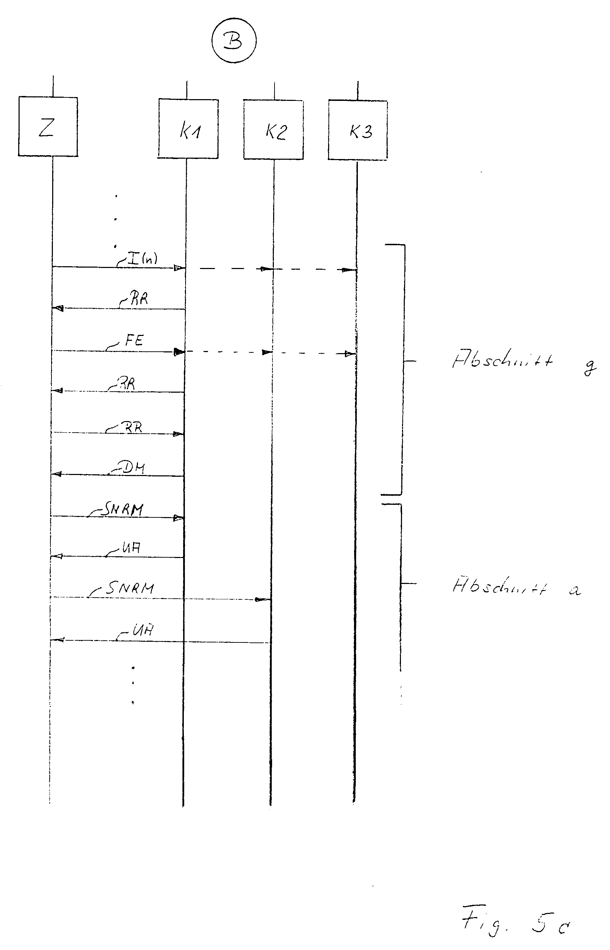

In Fig. 6 ist in einem Ablaufdiagramm schematisch die Kommunikation zwischen der Zentrale und den Kassen K1 bis K3 beschrieben, die im Falle eines Abbruchs der Datenübertragung erfolgt. Im Abschnitt h wird angenommen, daß die Zentrale Z den Abbruch initiiert. Die Kassen K1 bis K3 befinden sich im Mehrfachbetrieb, wobei die Kasse K1 die Rolle des Masters innehat. Zum Abbruch der Datenübertragung sendet die Zentrale Z einen FD-Befehl an die Kasse K1, der durch passives Mithören auch von den Kassen K2 und K3 empfangen wird. Die Kasse K1 quittiert den Empfang des FD-Befehls mit einer RR-Meldung. Auf den Empfang des von der Zentrale Z ausgesendeten RR-Befehls sendet die Kasse K1 den DM-Befehl, mit der die logische Verbindung zur Zentrale Z gelöst wird. Nach dem Abbruch der Datenübertragung durch die Zentrale Z schalten die Kassen K2 und K3 je auf ihre ursprüngliche Adresse zurück. Der Abschnitt h der Übertragung ist damit beendet. Die Zentrale Z kann nun wiederum eine direkte Verbindung zu den Kassen K1 bis K3 aufbauen und deren Wünsche nach Datenübertragung empfangen, um ggfs. im Mehrfachbetrieb an diese Daten zu senden.

Im Abschnitt i ist der Ablauf bei einem Abbruch durch den Master, d.h. durch die Kasse K1, dargestellt. Wünscht diese einen Abbruch der Datenübertragung bei laufendem Mehrfachbetrieb, so sendet sie an die Zentrale Z einen FD-Befehl. Dieser veranlaßt in der Zentrale Z den Abbruch der Datenübertragung. Die Zentrale Z sendet daraufhin einen RR-Befehl an die Kasse K1, woraufhin diese einen DM-Befehl an die Zentrale Z zurücksendet, wodurch die logische Verbindung zu ihr gelöst wird. Die Kassen K2 und K3 setzen nach dem Empfang des FD-Befehls ihre Adresse auf die ursprüngliche Adresse zurück, so daß die Zentrale Z zu ihnen eine Punkt-zu-Punkt-Verbindung aufbauen kann.

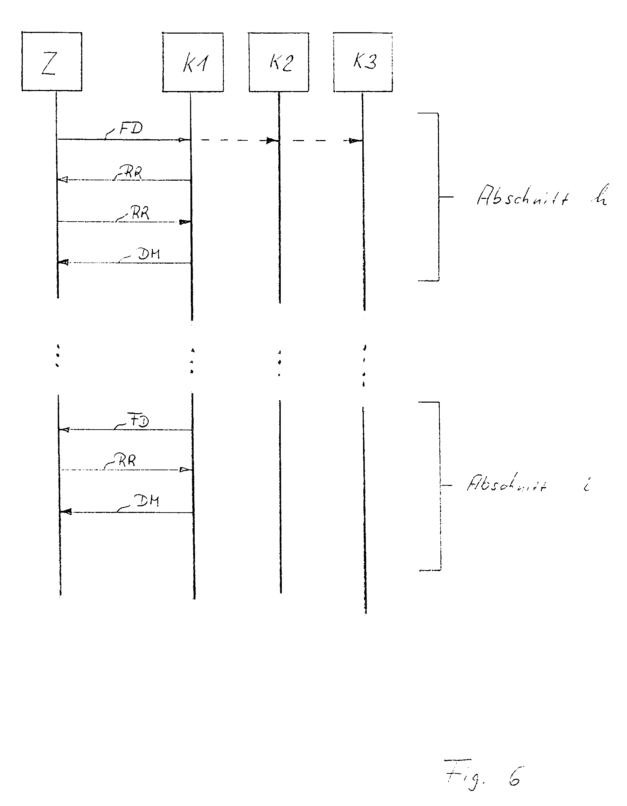

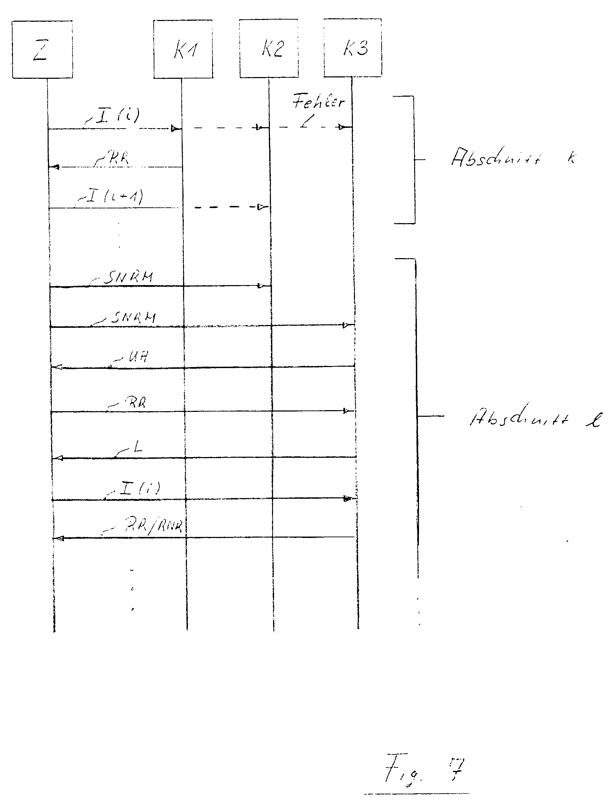

In Fig. 7 ist schematisch der Datenverkehr für den Fall dargestellt, daß die Kasse K3 während des Mehrfachbetriebs einen Übertragungsfehler feststellt. Es wird angenommen, daß der Fehler auf der Übertragungsstrecke zwischen der Kasse K1 und der Kasse K3 aufgetreten ist. Ein solcher Fehler kann z.B. durch die Blockprüfung mit Hilfe des Empfangsfolgezählers festgestellt werden. Nach dem Erkennen des Fehlers "klinkt" sich die Kasse K3 aus der simultanen Datenübertragung aus, d.h. sie setzt ihre Adresse auf ihre ursprüngliche Adresse zurück. Damit kann sie die an die Kasse K1 unter deren Adresse gesendeten Daten nicht mehr empfangen. Die simultane Datenübertragung wird dann nur noch für die Kassen K1 und K2 fortgeführt, wie im Abschnitt k durch einen gestrichelten Pfeil angedeutet ist.

Wenn nun gemäß dem Aufforderungsbetrieb die Zentrale Z an die Kasse K3 einen SNRM-Befehl aussendet, um bei dieser eine Rückmeldung auszulösen, so sendet diese eine UA-Meldung an die Zentrale Z zurück. Daraufhin sendet die Zentrale einen RR-Befehl an die Kasse K3. Diese gibt aufgrund der fehlerhaften Datenübertragung für die nicht empfangenen Datenblöcke einen Ladebefehl L an die Zentrale Z ab. Die Zentrale Z entscheidet nun, ob weitere Kassen ebenfalls Ladebefehle abgegeben haben, um ggfs. diese Kassen zu einer Gruppe zusammenzuführen, für die eine simultane Datenübertragung möglich ist. Im vorliegenden Fall wird angenommen, daß eine solche Gruppenbildung wegen fehlender Nachfrage nicht nötig ist, so daß die gesamte Nutzdatenblockfolge über eine Punkt-zu-Punkt Verbindung zur Kasse K3 übertragen wird. Diese beantwortet den ordnungsgemäßen Empfang der Datenblöcke gemäß den HDLC-Regeln mit RR- oder RNR-Meldungen.

## Patentansprüche

1. Verfahren zum Übertragen von Daten von einer Zentrale (Z) an mehrere Datenstationen (K1, K2, K3, Kn) über eine Mehrpunktverbindung nach einem vorgegebenen Übertragungsprotokoll, bei dem jeder Datenstation eine Adresse zugeordnet ist, unter der sie Daten empfängt sowie Meldungen an die Zentrale (Z) abgibt, und bei dem mindestens zwei Datenstationen Daten von der Zentrale (Z) anfordern, **dadurch gekennzeichnet**, daß die Zentrale (Z) eine der Daten anfordernden Datenstationen (K1, K2, K3, Kn) auswählt und die Adresse der ausgewählten Datenstation (K1) der weiteren Datenstation (K2, K3, Kn) übermittelt, daß diese daraufhin ihre Adresse auf die Adresse der ausgewählten Datenstation (K1) ändert, daß die Zentrale (Z) Daten an die ausgewählte Datenstation (K1) überträgt, die auch von der weiteren Datenstation (K2, K3, Kn) empfangen werden, wobei das Übertragungsprotokoll nur zwischen der Zentrale (Z) und der ausgewählten Datenstation (K1) während der Datenübertragung abgearbeitet wird, und daß nach Abschluß der Datenübertragung die weitere Datenstation (K2, K3, Kn) ihre Adresse zurücksetzt.

2. Verfahren nach Anspruch 1, **dadurch gekennzeichnet**, daß die Datenstationen (K1, K2, K3, Kn) zum Anfordern von Daten jeweils einen Ladebefehl (L) an die Zentrale (Z) senden, der eine Information über die Fähigkeit zum Empfangen von Daten unter einer geänderten Adresse enthält.

3. Verfahren nach Anspruch 2, **dadurch gekennzeichnet**, daß der Ladebefehl (L) Informationen über die Datenquelle (12), die Datensenke (18), eine Information über die angeforderten Daten und/oder eine Information über die Datenblocklänge des Empfangsdatenpuffers der jeweiligen Datenstation (K1, K2, K3) enthält.

4. Verfahren nach einem der Ansprüche 1 bis 3, **dadurch gekennzeichnet**, daß die Zentrale (Z) die von den Datenstationen (K1, K2, K3, Kn) ausgesendeten Anforderungen (L) nach Daten sammelt, daß sie aus diesen Datenstationen (K1, K2, K3, Kn) Gruppen bildet und für jede Gruppe eine Datenstation (K1) auswählt, und daß die Übertragung der Daten gruppenweise erfolgt.

5. Verfahren nach Anspruch 4, **dadurch gekennzeichnet**, daß die Zentrale (Z) die Anforderungen (L) nach Daten für eine vorgegebene Zeit sammelt, die vorzugsweise kleiner oder gleich 10 s ist.

6. Verfahren nach Anspruch 4 oder 5, **dadurch gekennzeichnet**, daß Gruppen von Datenstationen (K1, K2, K3) mit gleicher maximaler Datenblocklänge der Empfangsdatenpuffer und/oder mit gleichen angeforderten Daten gebildet werden.

7. Verfahren nach einem der Ansprüche 1 bis 6, **dadurch gekennzeichnet**, daß die Zentrale (Z) vor dem Beginn der Datenübertragung an die ausgewählte Datenstation (K1) sowie die weitere Datenstation (K2, K3) einen Mehrfachbetrieb-Befehl (M) sendet, der die Adresse der ausgewählten Datenstation (K1) und/oder Informationen über die Datenquelle (12) bzw. die Datensenke (18) enthält.

8. Verfahren nach Anspruch 7, **dadurch gekennzeichnet**, daß bei einer blockweisen Übertragung der Daten der Mehrfachbetrieb-Befehl (M) Informationen über die Datenblocklänge des Empfangspuffers enthält, auf die die an der Datenübertragung teilnehmenden Datenstationen (K1, K2, K3) einzustellen sind, wobei vorzugsweise als Datenblocklänge die größte gemeinsame Datenblocklänge der an der Datenübertragung teilnehmenden Datenstationen (K1, K2, K3) verwendet wird.

9. Verfahren nach Anspruch 7 oder 8, **dadurch gekennzeichnet**, daß an die ausgewählte Datenstation (K1) der Mehrfachbetrieb-Befehl (M) zuletzt ausgesendet wird.

10. Verfahren nach einem der Ansprüche 7 bis 9, **dadurch gekennzeichnet**, daß nach Empfang des Mehrfachbetriebs-Befehls (M) die Kommunikationsverbindung zwischen der Zentrale (Z) und der weiteren Datenstation (K2, K3) abgebaut wird.

11. Verfahren nach einem der vorhergehenden Ansprüche 1 bis 10, **dadurch gekennzeichnet**, daß die Zentrale (Z) zu Beginn einer Datenübertragung an die ausgewählte Datenstation (K1) einen Startbefehl (ST) sendet, der den aktuellen Wert eines Blockzählers enthält.

12. Verfahren nach einem der vorhergehenden Ansprüche, **dadurch gekennzeichnet**, daß die Datenübertragung nach dem HDLC-Übertragungsprotokoll abgewickelt wird.

13. Verfahren nach einem der vorhergehenden Ansprüche, **dadurch gekennzeichnet**, daß in der weiteren Datenstation (K2, K3) die empfangenen Daten einer Fehlerüberprüfung unterzogen werden, und daß vorzugsweise die weitere Datenstation (K3) nach dem Erkennen eines Fehlers ihre Adresse zurücksetzt.

14. Verfahren nach Anspruch 13, **dadurch gekennzeichnet**, daß die weitere Datenstation (K3) nach dem Erkennen eines Fehlers erneut eine Anforderung (L) nach Daten an die Zentrale (Z) sendet.

15. Verfahren nach einem der vorhergehenden Ansprüche 1 bis 14, **dadurch gekennzeichnet**, daß die ausgewählte Datenstation (K1) die empfangenen Daten einer Fehlerprüfung unterzieht.

16. Verfahren nach einem der vorhergehenden Ansprüche, **dadurch gekennzeichnet**, daß die ausgewählte Datenstation (K1) zum Abbruch der Datenübertragung an die Zentrale (Z) einen Abbruchbefehl (FD) sendet, daß diese nach dem Empfang des Abbruchbefehls (FD) ein das Ende der Datenübertragung kennzeichnenden Ende-Befehl an die ausgewählte Datenstation (K1) sendet, woraufhin die weitere Datenstation (K2, K3) ihre Adresse zurücksetzt.

17. Verfahren nach einem der vorhergehenden Ansprüche, **dadurch gekennzeichnet**, daß die Zentrale (Z) zum Abbruch der Datenübertragung einen Abbruchbefehl (FD) an die ausgewählte Datenstation (K1) sendet, woraufhin die ausgewählte Datenstation (K1) die Datenübertragung beendet und die weitere Datenstation (K2, K3) ihre Adresse zurücksetzt.

18. Verfahren nach einem der vorhergehenden Ansprüche 4 bis 17, **dadurch gekennzeichnet**, daß bei mehreren Gruppen die Datenübertragung nach dem Zeitmultiplexverfahren durchgeführt wird.

19. Verfahren nach einem der vorhergehenden Ansprüche 1 bis 18, **dadurch gekennzeichnet**, daß die bei jeder Datenstation (K1, K2, K3) ankommenden Daten von einer Übertragungseinrichtung (20) verarbeitet werden, deren Adresse durch die jeweilige Datenstation (K1) während des Betriebs änderbar ist.

## Claims

1. Method for transmitting data from a central station (Z) to a plurality of data stations (K1, K2, K3, Kn) via a multipoint connection according to a prescribed transmission protocol, in which allocated to every data station is an address at which it receives data and also outputs messages to the central station (Z), and in which at least two data stations request data from the central station (Z), characterized in that the central station (Z) selects one of the data stations (K1, K2, K3, Kn) requesting the data and transmits the address of the selected data station (K1) to the further data station (K2, K3, Kn), in that the latter thereupon changes its address to the address of the selected data station (K1), in that the central station (Z) transmits data to the selected data station (K1) which are also received by the further data station (K2, K3, Kn), the transmission protocol being executed only between the central station (Z) and the selected data station (K1) during the data transmission, and in that the further data station (K2, K3, Kn) resets its address after completion of the data transmission.

2. Method according to Claim 1, characterized in that, for requesting data, the data stations (K1, K2, K3, Kn) send in each case a load instruction (L) to the central station (Z), which instruction contains information about the capability to receive data at a modified address.

3. Method according to Claim 2, characterized in that the load instruction (L) contains information about the data source (12), the data sink (18), information about the requested data and/or information about the data block length of the receiving data buffer of the respective data station (K1, K2, K3).

4. Method according to one of Claims 1 to 3, characterized in that the central station (Z) collects the requests (L) for data transmitted from the data stations (K1, K2, K3, Kn), in that it forms groups from these data stations (K1, K2, K3, Kn) and selects one data station (K1) for each group, and in that the data is transmitted group-by-group.

5. Method according to Claim 4, characterized in that the central station (Z) collects the requests (L) for data for a prescribed time, which is preferably less than or equal to 10 s.

6. Method according to Claim 4 or 5, characterized in that groups of data stations (K1, K2, K3) are formed with the same maximum data block length of the receiving data buffer and/or with the same requested data.

7. Method according to one of Claims 1 to 6, characterized in that before commencing data transmission, the central station (Z) sends a multiple operation instruction (M) to the selected data station (K1) and also the further data station (K2, K3), which instruction contains the address of the selected data station (K1) and/or information about the data source (12) or the data sink (18) respectively.

8. Method according to Claim 7, characterized in that, given a block-by-block transmission of the data, the multiple operation instruction (M) contains information about the data block length of the receiving buffer to which the data stations (K1, K2, K3) participating in the data transmission must be set, the largest common data block length of the data stations (K1, K2, K3) participating in the data transmission being preferably used as the data block length.

9. Method according to Claim 7 or 8, characterized in that the multiple operation instruction (M) is transmitted last to the selected data station (K1).

10. Method according to one of Claims 7 to 9, characterized in that the communications connection between the central station (Z) and the further data station (K2, K3) is discontinued after the multiple operation instruction (M) has been received.

11. Method according to one of the preceding Claims 1 to 10, characterized in that at the beginning of data transmission, the central station (Z) sends a start instruction (ST) containing the current value of a block counter to the selected data station (K1).

12. Method according to one of the preceding claims, characterized in that the data is transmitted according to an HDLC transmission protocol.

13. Method according to one of the preceding claims, characterized in that the data received are subjected to error checking in the further data station (K2, K3), and in that the further data station (K3) preferably resets its address after an error is detected.

14. Method according to Claim 13, characterized in that the further data station (K3) sends a request (L) for data to the central station (Z) again after an error is detected.

15. Method according to one of the preceding Claims 1 to 14, characterized in that the selected data station (K1) subjects the received data to error checking.

16. Method according to one of the preceding claims, characterized in that, for aborting the data transmission, the selected data station (K1) sends an abort instruction (FD) to the central station (Z), in that after receiving the abort instruction (FD) the latter sends an end instruction signifying the end of the data transmission to the selected data station (K1), whereupon the further data station (K2, K3) resets its address.

17. Method according to one of the preceding claims, characterized in that, for aborting the data transmission, the central station (Z) sends an abort instruction (FD) to the selected data station (K1), whereupon the selected data station (K1) terminates the data transmission and the further data station (K2, K3) resets its address.

18. Method according to one of the preceding Claims 4 to 17, characterized in that the data is transmitted according to the time-division multiplex method if there are a plurality of groups.

19. Method according to one of the preceding Claims 1 to 18, characterized in that the data arriving at each data station (K1, K2, K3) are processed by a transmission device (20), the address of which can be changed by the respective data station (K1) during operation.

## Revendications

1. Procédé pour transmettre des données d'un central (Z) à plusieurs postes de transmission de données (K1,K2,K3,Kn), par l'intermédiaire d'une liaison multipoint suivant un protocole de transmission prédéterminé, selon lequel on associe à chaque poste de transmission de données une adresse, à laquelle il reçoit des données et fournit des messages au central (Z), et selon lequel au moins deux postes de transmission de données demandent des données au central (Z), caractérisé par le fait que le central (Z) sélectionne l'un des postes de données (K1,K2,K3, Kn) demandant les données et retransmet l'adresse du poste sélectionné de transmission de données (K1) à l'autre poste de transmission de données (K2,K3,Kn), que ce dernier change alors son adresse en l'adresse du poste sélectionné de transmission de données (K1), que le central (Z) transmet au poste sélectionné de transmission de données (K1), des données qui sont également reçues par l'autre poste de transmission de données (K2,K3,Kn), le protocole de transmission étant exécuté uniquement entre le central (Z) et le poste sélectionné de transmission de données (K1) pendant la transmission des données, et qu'à la fin de la transmission de données, l'autre poste de transmission de données (K2,K3,Kn) rétablit son adresse initiale.

2. Procédé suivant la revendication 1, caractérisé par le fait que pour la demande de données, les postes de transmission de données (K1,K2,K3,Kn) envoient au central (Z) respectivement une instruction de chargement (L), qui contient une information concernant la capacité à recevoir des données à une adresse modifiée.

3. Procédé suivant la revendication 2, caractérisé par le fait que l'instruction de chargement (L) contient des informations concernant la source de données (12), le collecteur de données (18), une information concernant les données demandées et/ou une information concernant la longueur des blocs de données du tampon de données de réception du poste considéré de transmission de données (K1, K2,K3).

4. Procédé suivant l'une des revendications 1 à 3, caractérisé par le fait que le central (Z) collecte les demandes (L) de données, demandes qui sont émises par les postes de transmission de données (K1,K2,K3,Kn), qu'il forme des groupes à partir de ces postes de transmission de données (K1,K2,K3,Kn) et qu'il sélectionne pour chaque groupe un poste de transmission de données (K1) et que la transmission des données s'effectue groupe par groupe.

5. Procédé suivant la revendication 4, caractérisé par le fait que le central (Z) collecte les demandes (L) de données pendant un intervalle de temps prédéterminé, qui est de préférence inférieur ou égal à 10 s.

6. Procédé suivant la revendication 4 ou 5, caractérisé par le fait que l'on forme des groupes de postes de transmission de données (K1,K2,K3) ayant la même longueur maximale de blocs de données des tampons de données de réception et/ou des données demandées identiques.

7. Procédé suivant l'une des revendications 1 à 6, caractérisé par le fait qu'avant le début de la transmission de données, le central (Z) envoie au poste sélectionné de transmission de données (K1) ainsi qu'à l'autre poste de transmission de données (K2,K3), une instruction de fonctionnement multiple (M), qui contient l'adresse du poste sélectionné de transmission de données (K1) et/ou des informations concernant la source de transmission de données (12) ou le collecteur de données (18).

8. Procédé suivant la revendication 7, caractérisé par le fait que dans le cas d'une transmission par blocs des données, l'instruction de fonctionnement multiple (M) contient des informations concernant la longueur des blocs de données du tampon de réception, sur laquelle doivent être réglés les postes de transmission de données (K1,K2,K3) participant à la transmission de données, la longueur maximale commune des blocs de données des postes de transmission de données (K1,K2,K3) participant à la transmission de données étant utilisée de préférence comme longueur des blocs de données.

9. Procédé suivant la revendication 7 ou 8, caractérisé par le fait que l'on envoie l'instruction de fonctionnement multiple (M) en dernier au poste sélectionné de transmission de données (K1).

10. Procédé suivant l'une des revendications 7 à 9, caractérisé par le fait qu'après réception de l'instruction de fonctionnement multiple (M), on établit la liaison de communication entre le central (Z) et l'autre poste de transmission de données (K2,K3).

11. Procédé suivant l'une des revendications précédentes 1 à 10, caractérisé par le fait qu'au début d'une transmission de données, le central (Z) envoie au poste sélectionné de transmission de données (K1), une instruction de démarrage (ST), qui contient la valeur actuelle d'un compteur de blocs.

12. Procédé suivant l'une des revendications précédentes, caractérisé par le fait que la transmission de données se déroule selon le protocole de transmission HDLC.

13. Procédé suivant l'une des revendications précédentes, caractérisé par le fait que dans l'autre poste de transmission de données (K2,K3), on soumet les données reçues à un contrôle d'erreurs, et que de préférence l'autre poste de transmission de données (K3) rétablit son adresse initiale après l'identification d'une erreur.

14. Procédé suivant la revendication 13, caractérisé par le fait qu'après l'identification d'une erreur, l'autre poste de transmission de données (K3) envoie à nouveau une demande (L) de données au central (Z).

15. Procédé suivant l'une des revendications précédentes 1 à 14, caractérisé par le fait que le poste sélectionné de transmission de données (K1) soumet les données reçues à un contrôle d'erreurs.

16. Procédé suivant l'une des revendications précédentes, caractérisé par le fait que le poste sélectionné de transmission de données (K1) envoie au central (Z), pour l'interruption de la transmission de données, une instruction d'interruption (FD), qu'après la réception de l'instruction d'interruption (FD), le central envoie une instruction de fin, qui caractérise la fin de la transmission de données, au poste sélectionné de transmission de données (K1), l'autre poste de transmission de données (K2,K3) rétablissant ensuite son adresse initiale.

17. Procédé suivant l'une des revendications précédentes, caractérisé par le fait que pour l'interruption de la transmission de données, le central (Z) envoie une instruction d'interruption (FD) au poste sélectionné de transmission de données (K1), le poste sélectionné de transmission de données (K1) mettant fin ensuite à la transmission de données, et l'autre poste de transmission de données (K2,K3) rétablissant son adresse initiale.

18. Procédé suivant l'une des revendications précédentes 4 à 17, caractérisé par le fait que dans le cas de plusieurs groupes, on effectue la transmission de données selon le procédé de multiplexage temporel.

19. Procédé suivant l'une des revendications précédentes 1 à 18, caractérisé par le fait que les données, qui arrivent dans chaque poste de transmission de données (K1,K2,K3), sont traitées par un dispositif de transmission (20), dont l'adresse peut être modifiée par le poste respectif de transmission de données (K1), pendant le fonctionnement.
